# FASCICULE DE BREVET EUROPEEN

(11) **EP 4 204 378 B1**
(45) Date de publication et mention de la délivrance du brevet: **05.06.2024**
(21) Numéro de dépôt: 21759112.2
(22) Date de dépôt: 10.08.2021
(51) Int. Cl.: C03C 17/36

(54) **MATÉRIAU BAS ÉMISSIF À HAUTE SÉLECTIVITÉ ET VITRAGE COMPRENANT UN TEL MATÉRIAU**
MATERIAL MIT NIEDRIGER EMISSIVITÄT UND HOHER SELEKTIVITÄT SOWIE VERGLASUNG MIT EINEM SOLCHEN MATERIAL
LOW-EMISSIVITY MATERIAL WITH HIGH SELECTIVITY AND GLAZING COMPRISING SUCH A MATERIAL

(30) Priorité: 27.08.2020 FR 2008729
(43) Date de publication de la demande: 05.07.2023
(73) Titulaire: Saint-Gobain Glass France, 92400 Courbevoie (FR)
(72) Inventeur: MONMEYRAN, Corentin, 75019 PARIS (FR); DA SILVA BALANI, Vinicius, 12231-675 SAO JOSE DOS CAMPOS (BR)
(74) Mandataire: Saint-Gobain Recherche
(86) Numéro de dépôt international: PCT/FR2021/051458
(87) Numéro de publication internationale: WO 2022/043626

(56) Documents cités:
- WO-A1-2019/157798
- FR-A1- 2 856 678

## Description

L'invention concerne un matériau comprenant un substrat transparent revêtu d'un revêtement fonctionnel tel qu'un empilement comprenant une couche métallique fonctionnelle à base d'argent. L'invention concerne également les vitrages comprenant ces matériaux ainsi que l'utilisation de tels matériaux pour fabriquer des vitrages d'isolation thermique et/ou de protection solaire.

Dans la suite de la description, le terme « fonctionnel » qualifiant « revêtement fonctionnel » signifie « pouvant agir sur le rayonnement solaire et/ou le rayonnement infrarouge ».

Ces vitrages peuvent être destinés aussi bien à équiper les bâtiments que les véhicules, en vue notamment de :
- diminuer l'effort de climatisation et/ou d'empêcher une surchauffe excessive, vitrages dits « de contrôle solaire » et/ou
- diminuer la quantité d'énergie dissipée vers l'extérieur, vitrages dits « bas émissifs ».

FR 2 856 678 ou WO 2019/157798 décrivent de tels vitrages.

Les vitrages de contrôle solaire sont soumis à un certain nombre de contraintes.

Les revêtements fonctionnels doivent être suffisamment filtrants vis-à-vis du rayonnement solaire et notamment vis-à-vis de la partie du rayonnement solaire non visible située entre environ 780 nm et 2500 nm, habituellement appelé infrarouge solaire (IR solaire) tout en laissant passer au maximum la lumière visible.

La sélectivité « S » permet d'évaluer la performance de ces vitrages. Elle correspond au rapport de la transmission lumineuse TLᵥᵢₛ dans le visible du vitrage sur le facteur solaire FS du vitrage (S = TLᵥᵢₛ / FS). Le facteur solaire « FS ou g » correspond au rapport en % entre l'énergie solaire totale entrant dans le local à travers le vitrage et l'énergie solaire incidente.

Les revêtements fonctionnels doivent aussi être suffisamment durables. En particulier, ils doivent être résistants aux contraintes physiques telles que les rayures.

Les couches métalliques fonctionnelles à base d'argent (ou couches d'argent) ont des propriétés de conduction électrique et de réflexion des rayonnements infrarouges (IR) avantageuses. De telles couches sont donc utilisées dans des vitrages de contrôle solaire ou bas émissif.

Les empilements comprenant des couches métalliques fonctionnelles à base d'argent (ou couches d'argent) sont notamment les plus performants pour augmenter la sélectivité des vitrages tout en préservant les qualités optiques et esthétiques.

Ces couches d'argent sont déposées entre des revêtements à base de matériaux diélectriques comprenant généralement plusieurs couches diélectriques (ci-après « revêtements diélectriques ») permettant d'ajuster les propriétés optiques de l'empilement. Les effets interférentiels sont mis à profit pour ajuster les couleurs des matériaux. Ces couches diélectriques permettent en outre de protéger la couche d'argent des agressions chimiques ou mécaniques.

Cependant, la résistance chimique, thermique et mécanique des revêtements comprenant ces couches métalliques fonctionnelles à base d'argent est souvent insuffisante.

Leur faible propriété de résistance rend difficile leur utilisation en simple vitrage. Ces revêtements à base d'argent ne sont pas suffisamment robustes lorsqu'ils sont exposés aux conditions climatiques, au nettoyage et donc aux agressions mécaniques.

De plus, selon les applications visées, certains matériaux doivent subir des traitements thermiques, destinés à améliorer les propriétés du substrat et/ou de l'empilement de couches minces. Il peut par exemple s'agir, dans le cas de substrats en verre, de traitement de trempe thermique destinés à renforcer mécaniquement le substrat en créant de fortes contraintes de compression à sa surface.

Or, les traitements thermiques à température élevée tels qu'un recuit, un bombage et/ou une trempe provoquent des modifications au sein de la couche d'argent. Ils rendent en général les empilements plus sensibles aux rayures. D'autre part, lorsque des rayures sont créées sur un matériau avant traitement thermique, leur visibilité augmente de manière considérable après traitement thermique.

Cette faible résistance se traduit lors d'une utilisation dans des conditions normales, par l'apparition à court terme de défauts tels que des points de corrosion, des rayures, voire de l'arrachement total ou partiel de l'empilement. Ce phénomène est accentué lorsque ces vitrages sont soumis à un traitement thermique à température élevée.

Tous défauts ou rayures, qu'ils soient dus à la corrosion ou à des sollicitations mécaniques, sont susceptibles d'altérer non seulement les performances énergétiques et optiques mais également l'esthétique du substrat revêtu.

L'invention vise tout particulièrement des matériaux comprenant un substrat revêtu d'un empilement, présentant une haute sélectivité. Toutefois, il demeure essentiel que les propriétés avantageuses de sélectivité soient obtenues sans nuire :
- à la résistance mécanique notamment à la résistance aux rayures et à la brosse, de préférence, que le matériau ait subi ou non un traitement thermique à température élevée, et
- à la résistance à la corrosion.

Les propriétés optiques et électriques des matériaux dépendent directement de la qualité des couches d'argent telle que leur état cristallin, leur homogénéité ainsi que de leur environnement. On entend par « environnement », la nature des couches à proximité de la couche d'argent et la rugosité de surface des interfaces avec ces couches.

Dans la gamme des empilements à base d'argent, il existe un large éventail de configurations en fonction des performances souhaitées.

Pour améliorer l'adhérence des couches d'argent et réduire les interactions chimiques avec les couches voisines, il est connu d'utiliser de fines couches appelées couche de blocage en contact direct avec la couche d'argent. Les couches de blocage sont généralement à base d'un métal choisi parmi le nickel, le chrome, le titane, le niobium, ou d'un alliage de ces différents métaux. Les différents métaux ou alliages cités peuvent également être partiellement oxydés, notamment présenter une sous-stoechiométrie en oxygène (par exemple TiOx ou NiCrOx).

Ces couches de blocage sont très fines, normalement d'une épaisseur inférieure à 3,5 nm et sont susceptibles à ces épaisseurs d'être partiellement oxydées pendant un traitement thermique. D'une manière générale, ces couches de blocage sont des couches sacrificielles, susceptibles de capter l'oxygène provenant de l'atmosphère ou du substrat, évitant ainsi l'oxydation de la couche d'argent.

Pour les produits haut de gamme, des empilements comprenant plusieurs couches à base d'argent sont utilisées. Les couches d'argent sont entourées d'autres couches qui améliorent la qualité de la couche d'argent et donc les performances du matériau. En particulier, il est connu d'utiliser au contact, au-dessus et en dessous des couches d'argent, des couches diélectriques à fonction stabilisante destinées à favoriser le mouillage et la nucléation de la couche d'argent. Des couches diélectriques à base d'oxyde de zinc cristallisé sont notamment utilisées à cette fin.

Cependant, les couches à base d'oxyde de zinc cristallisé sont des couches « fragiles » qui rendent l'empilement plus sensible aux rayures et à la corrosion.

Lorsque pour l'application visée, la robustesse est une caractéristique clé, il est possible d'utiliser une seule couche d'argent et de ne pas utiliser de couche à base d'oxyde de zinc. En procédant ainsi, la robustesse, la processabilité et la durée de vie du revêtement sont grandement améliorées.

En revanche, les couches de blocage ne peuvent pas être enlevées sans rendre l'empilement trop sensible aux rayures pour être traité industriellement.

Les meilleurs résultats en terme de robustesse ont été obtenus jusqu'alors avec un matériau ne comprenant pas de d'oxyde de zinc cristallisé et dont chaque revêtement diélectrique comprend au moins une couche comprenant du silicium. La couche d'argent est située au contact des deux couches de blocage situées respectivement au-dessus et en dessous de la couche d'argent. Des matériaux de ce type comprenant la séquence SiN/NiCr/Ag/NiCr/SiN sont qualifiés de matériau de référence dans la présente demande.

Toutefois, l'utilisation des couches de blocage seules ne permet pas d'obtenir des matériaux suffisamment robustes et performants présentant notamment une sélectivité suffisamment élevée. En effet, ces couches de blocage ne sont pas sélectives et absorbent indifféremment la lumière visible et infrarouge. Ces couches de blocage n'ont pas une influence positive sur les performances énergétiques du matériau.

La présente invention remédie à ces inconvénients. Le demandeur a mis au point un matériau comprenant un substrat revêtu d'un empilement, présentant une haute sélectivité sans nuire :
- à la résistance mécanique notamment à la résistance aux rayures et à la brosse, de préférence, que le matériau ait subi ou non un traitement thermique à température élevée, et
- à la résistance à la corrosion.

L'invention concerne donc un matériau comprenant un substrat transparent revêtu d'un empilement comprenant au moins une couche métallique fonctionnelle à base d'argent et au moins deux revêtements diélectriques, chaque revêtement diélectrique comportant au moins une couche diélectrique, de manière à ce que chaque couche métallique fonctionnelle soit disposée entre deux revêtements diélectriques, caractérisé en ce que l'empilement comprend :
- deux couches de blocage situées au contact, en dessous et au-dessus, d'une couche métallique fonctionnelle à base d'argent, les couches de blocages sont choisies parmi les couches métalliques à base d'un métal ou d'un alliage métallique d'un ou plusieurs éléments choisis parmi le titane, le nickel, le chrome, le tantale, le zirconium et le niobium,
- une couche de nitrure de titane située au-contact d'une couche de blocage et séparée de la couche fonctionnelle à base d'argent par ladite couche de blocage.

La séquence particulière de l'invention Ag/couche de blocage/TiN ou TiN/couche de blocage/Ag présente pour avantage, par rapport à l'utilisation d'une simple couche de blocage, d'offrir le meilleur compromis en terme de sélectivité, d'émissivité et de durabilité mécanique et chimique. En effet, la sélectivité et l'émissivité des matériaux selon l'invention sont toutes deux meilleures que celles obtenues avec des matériaux de référence, tout en conservant une durabilité mécanique et chimique élevée.

La solution de l'invention permet donc d'améliorer les performances énergétiques sans dégrader la résistance aux rayures et sans augmenter la complexité de l'empilement.

Selon un mode de réalisation avantageux, les revêtements diélectriques encadrant la couche fonctionnelle sont essentiellement constitués de couches comprenant du silicium et/ou de l'aluminium.

L'invention concerne également :
- un vitrage comprenant un matériau selon l'invention,
- un vitrage comprenant un matériau selon l'invention monté sur un dispositif, sur un véhicule, notamment automobile ou sur un bâtiment, et
- le procédé de préparation d'un matériau ou d'un vitrage selon l'invention,
- l'utilisation d'un vitrage selon l'invention en tant que vitrage de contrôle solaire et/ou bas émissif pour le bâtiment ou les véhicules,
- un bâtiment, un véhicule ou un dispositif comprenant un vitrage selon l'invention.

Le vitrage de l'invention convient aussi dans toutes applications nécessitant l'utilisation d'un empilement comprenant des couches d'argent pour lesquelles la résistance mécanique et à la corrosion sont des paramètres clés.

Le matériau selon l'invention peut être sous forme de vitrage monolithique, feuilleté et/ou multiple, en particulier double vitrage ou triple vitrage.

Dans toute la description le substrat selon l'invention est considéré posé horizontalement. L'empilement de couches minces est déposé au-dessus du substrat. Le sens des expressions « au-dessus » et « en-dessous » et « inférieur » et « supérieur » est à considérer par rapport à cette orientation. A défaut de stipulation spécifique, les expressions « au-dessus » et « en-dessous » ne signifient pas nécessairement que deux couches et/ou revêtements sont disposés au contact l'un de l'autre. Lorsqu'il est précisé qu'une couche est déposée « au contact » d'une autre couche ou d'un revêtement, cela signifie qu'il ne peut y avoir une (ou plusieurs) couche(s) intercalée(s) entre ces deux couches (ou couche et revêtement).

Toutes les caractéristiques lumineuses décrites sont obtenues selon les principes et méthodes de la norme européenne EN 410 se rapportant à la détermination des caractéristiques lumineuses et solaires des vitrages utilisés dans le verre pour la construction. On considère que la lumière solaire entrant dans un bâtiment va de l'extérieur vers l'intérieur.

Selon l'invention, les caractéristiques lumineuses sont mesurées selon l'illuminant D65 à 2° perpendiculairement au matériau monté dans un double vitrage :
- TL correspond à la transmission lumineuse dans le visible en %,
- Rext correspond à la réflexion lumineuse extérieure dans le visible en %, observateur côté espace extérieur,
- Rint correspond à la réflexion lumineuse intérieure dans le visible en %, observateur coté espace intérieur,
- a*T et b*T correspondent aux couleurs en transmission a* et b* dans le système L*a*b*,
- a*Rext et b*Rext correspondent aux couleurs en réflexion a* et b* dans le système L*a*b*, observateur côté espace extérieur,
- a*Rint et b*Rint correspondent aux couleurs en réflexion a* et b* dans le système L*a*b*, observateur côté espace intérieur.

Les caractéristiques préférées qui figurent dans la suite de la description sont applicables aussi bien au matériau selon l'invention que, le cas échéant, aux vitrages, aux dispositifs ou au procédé selon l'invention.

Le matériau, c'est-à-dire le substrat transparent revêtu de l'empilement, peut être destiné à subir un traitement thermique à température élevée. Par conséquent, selon ce mode de réalisation, l'empilement et le substrat ont de préférence été soumis à un traitement thermique à une température élevée tel qu'une trempe, un recuit ou un bombage.

L'empilement est déposé par pulvérisation cathodique assistée par un champ magnétique (procédé magnétron). Selon ce mode de réalisation avantageux, toutes les couches de l'empilement sont déposées par pulvérisation cathodique assistée par un champ magnétique.

Sauf mention contraire, les épaisseurs évoquées dans le présent document sont des épaisseurs physiques et les couches sont des couches minces. On entend par couche mince, une couche présentant une épaisseur comprise entre 0,1 nm et 100 micromètres.

L'empilement comprend au moins une couche de nitrure de titane située au-contact d'une couche de blocage.

La couche de nitrure de titane peut être située au-dessus ou en dessous de la couche fonctionnelle à base d'argent, de préférence au-dessus.

De préférence, les couches de nitrure de titane sont à base de nitrure de titane ou de préférence encore sont constituées essentiellement de nitrure de titane.

Des couches à base de titane selon l'invention comprennent par exemple plus de 50% en masse de nitrure de titane, plus de 80% en masse, plus de 90% en masse ou même plus de 95% en masse de nitrure de titane.

Le nitrure de titane selon l'invention n'est pas nécessairement stoechiométrique (ratio atomique Ti/N de 1) mais peut être sur- ou sous-stoechiométrique. Selon un mode avantageux, le ratio N/Ti est compris entre 1 et 1,2. Egalement, le nitrure de titane selon l'invention peut comprendre une quantité mineure d'oxygène, par exemple entre 1 et 10% molaire d'oxygène, notamment entre 1 et 5% molaire d'oxygène.

Selon un mode particulièrement préféré, les couches en nitrure de titane selon l'invention répondent à la formule générale TiNₓO_{y}, dans laquelle 1,00 < x < 1,20 et dans laquelle 0,01 < y < 0,10.

La couche à base de nitrure de titane comprend au moins 50 %, au moins 60 %, au moins 70 %, au moins 80 %, au moins 95,0 %, au moins 96,5 %, au moins 98,0 % ou au moins 99,0 % en masse de titane par rapport à la masse de tous les éléments constituant la couche à base de nitrure de titane autre que l'azote ou l'oxygène.

La couche à base de nitrure de titane peut comprendre ou être constituées d'éléments autres que le titane et de l'azote. Ces éléments peuvent être choisis parmi le silicium, le chrome, l'hafnium et le zirconium. De préférence, les éléments sont choisis parmi le zirconium. De préférence, la couche à base de nitrure de titane comprend au plus 40%, au plus 35 %, au plus 20 % ou au plus 10 % en masse d'éléments autres que du titane par rapport à la masse de tous les éléments constituant la couche à base de nitrure de titane autres que de l'azote.

La couche à base de nitrure de titane peut avoir une épaisseur:
- supérieure ou égale à 2 nm, supérieure ou égale à 2 nm, supérieure ou égale à 3 nm, supérieure ou égale à 4 nm, supérieure ou égale à 5 nm, et/ou
- inférieure ou égale à 20 nm, inférieure ou égale à 18 nm, inférieure ou égale à 15 nm, inférieure ou égale à 12 nm.

La couche de nitrure de titane a de préférence une épaisseur comprise entre 5 et 15 nm.

La couche de à base de nitrure de titane peut être obtenue par pulvérisation cathodique à partir d'une cible métallique de titane dans une atmosphère comprenant de l'azote.

La couche métallique fonctionnelle à base d'argent, avant ou après traitement thermique, comprend au moins 95,0 %, de préférence au moins 96,5 % et mieux au moins 98,0 % en masse d'argent par rapport à la masse de la couche fonctionnelle.

De préférence, la couche métallique fonctionnelle à base d'argent avant traitement thermique comprend moins de 5 % ou moins de 1,0 % en masse de métaux autres que de l'argent par rapport à la masse de la couche métallique fonctionnelle à base d'argent.

L'épaisseur de la couche fonctionnelle à base d'argent est comprise de 5 à 25 nm ou de 7 à 16 nm.

De préférence, l'empilement de couches minces comprend une seule couche fonctionnelle. L'empilement de couches minces comprend dans ce cas une seule couche fonctionnelle et deux revêtements diélectriques comportant au moins une couche diélectrique, de manière à ce que chaque couche fonctionnelle soit disposée entre deux revêtements diélectriques. Les empilements à une seule couche d'argent sont en général les plus robustes mécaniquement.

L'empilement de couches minces peut comprendre au moins deux couches fonctionnelles métalliques à base d'argent et au moins trois revêtements diélectriques comportant au moins une couche diélectrique, de manière à ce que chaque couche fonctionnelle soit disposée entre deux revêtements diélectriques.

L'empilement de couches minces peut comprendre au moins trois couches fonctionnelles métalliques à base d'argent et au moins quatre revêtements diélectriques comportant au moins une couche diélectrique, de manière à ce que chaque couche fonctionnelle soit disposée entre deux revêtements diélectriques.

L'empilement est situé sur au moins une des faces du substrat transparent.

L'empilement comprend deux couches de blocage situées au contact, en-dessous et au-dessus de la couche métallique fonctionnelle à base d'argent.

La fonction des couches de blocage est de protéger les couches d'argent en évitant une éventuelle dégradation liée au dépôt d'un revêtement diélectrique ou liée à un traitement thermique.

Une couche de blocage située au-dessus d'une couche métallique fonctionnelle à base d'argent est appelée surcouche de blocage. Une couche de blocage située en-dessous d'une couche métallique fonctionnelle à base d'argent est appelée sous-couche de blocage.

Les couches de blocage sont choisies parmi les couches métalliques à base d'un métal ou d'un alliage métallique d'un ou plusieurs éléments choisis parmi le titane, le nickel, le chrome, le tantale et le niobium telles que Ti, Ta, Nb, Ni, Cr, NiCr.

Ces couches de blocage déposées sous forme métallique peuvent subir une oxydation partielle ou totale selon leur épaisseur et la nature des couches qui les entourent, par exemple, au moment du dépôt de la couche suivante ou par oxydation au contact de la couche sous-jacente.

Les couches de blocage peuvent être choisies parmi les couches métalliques notamment d'un alliage de nickel et de chrome (NiCr) ou de titane.

Avantageusement, les couches de blocage sont des couches métalliques à base de nickel. Les couche de blocage métallique à base de nickel peuvent comprendre, (avant traitement thermique), au moins 20 %, au moins 30 %, au moins 40 %, au moins 50 %, au moins 60 %, au moins 70 %, au moins 80 %, au moins 90 %, au moins 95 %, au moins 96 %, au moins 97 %, au moins 98 %, au moins 99 % ou 100 % en masse de nickel par rapport à la masse de la couche métallique à base de nickel.

Les couches métalliques à base de nickel peuvent être choisies parmi :
- les couches métalliques de nickel,
- les couches métalliques de nickel dopées,
- les couches métalliques à base d'alliage de nickel.

Les couches métalliques à base d'alliage de nickel peuvent être à base d'alliage de nickel et de chrome.

Chaque couche de blocage présente une épaisseur comprise entre 0,1 et 5,0 nm. L'épaisseur de ces couches de blocage peut être :
- d'au moins 0,1 nm, d'au moins 0,2 nm, d'au moins 0,4 ou nm, d'au moins 0,5 nm, et/ou
- d'au plus 5,0 nm, d'au plus 3,0 nm.

De préférence, la couche de blocage au contact de la couche de nitrure de titane a une épaisseur inférieure à l'épaisseur de la couche de blocage qui n'est pas au contact de la couche de nitrure de titane.

Selon l'invention, on considère qu'une couche a une épaisseur inférieure à l'épaisseur d'une autre couche si la différence d'épaisseur est d'au moins 0,2 nm, d'au moins 0,5 nm d'au moins 1,0 nm, ou d'au moins 1,5 nm.

De préférence, la couche de blocage au contact de la couche de nitrure de titane a une épaisseur :
- d'au moins 0,1 nm, d'au moins 0,2 nm, d'au moins 0,4 ou nm, d'au moins 0,5 nm, et/ou
- d'au plus 2,0 nm, d'au plus 1,5 nm, d'au plus 1 nm.

On considère qu'un « même » revêtement diélectrique se situe :
- entre le substrat et la première couche fonctionnelle,
- entre chaque couche métallique fonctionnelle à base d'argent,
- au-dessus de la dernière couche fonctionnelle (la plus éloignée du substrat).

Par « revêtement diélectrique » au sens de la présente invention, il faut comprendre qu'il peut y avoir une seule couche ou plusieurs couches de matériaux différents à l'intérieur du revêtement. Un « revêtement diélectrique » selon l'invention comprend majoritairement des couches diélectriques. Cependant, selon l'invention ces revêtements peuvent comprendre également des couches d'autre nature notamment des couches absorbantes ou des couches métalliques autre que des couches fonctionnelles à base d'argent. Par exemple, le revêtement le plus éloigné du substrat peut comprendre une couche de protection déposée sous forme métallique.

Selon l'invention, les couches de blocage ne font pas parties des revêtements diélectriques. Cela signifie que lorsque l'on détermine l'épaisseur d'un revêtement diélectrique, on ne prend pas en considération l'épaisseur des couches de blocages.

En revanche, lorsque l'on détermine l'épaisseur d'un revêtement diélectrique, on prend en compte l'épaisseur de la couche de nitrure de titane.

Par « couche diélectrique » au sens de la présente invention, il faut comprendre que du point de vue de sa nature, le matériau est « non métallique », c'est-à-dire n'est pas un métal. Dans le contexte de l'invention, ce terme désigne un matériau présentant un rapport n/k sur toute la plage de longueur d'onde du visible (de 380 nm à 780 nm) égal ou supérieur à 5. n désigne l'indice de réfraction réel du matériau à une longueur d'onde donnée et k représente la partie imaginaire de l'indice de réfraction à une longueur d'onde donnée ; le rapport n/k étant calculé à une longueur d'onde donnée identique pour n et pour k.

L'épaisseur d'un revêtement diélectrique correspond à la somme des épaisseurs des couches le constituant.

De préférence, les revêtements diélectriques présentent une épaisseur supérieure à 5 nm, comprise entre 10 et 200 nm, comprise entre 10 et 100 nm ou comprise entre 10 et 70 nm.

Les couches diélectriques des revêtements diélectriques présentent les caractéristiques suivantes seules ou en combinaison :
- elles sont déposées par pulvérisation cathodique assistée par champ magnétique,
- elles sont choisies parmi les oxydes ou nitrures d'un ou plusieurs éléments choisi(s) parmi le titane, le silicium, l'aluminium, le zirconium, l'étain et le zinc,
- elles ont une épaisseur supérieure à 2 nm, de préférence comprise entre 2 et 100 nm, entre 5 et 50 nm ou entre 5 et 30 nm.

Selon un mode de réalisation, l'empilement ne comprend pas de couche diélectrique à base d'oxyde de zinc. Ces couches à base d'oxyde de zinc correspondent à des couches dites stabilisante ou de mouillage. De tels couches à base d'oxyde de zinc, peuvent comprendre, au moins 80 %, au moins 90 % en masse de zinc par rapport à la masse totale de tous les éléments constituant la couche à base d'oxyde de zinc à l'exclusion de l'oxygène et de l'azote.

Dans tous les empilements, le revêtement diélectrique le plus proche du substrat est appelé revêtement inférieur et le revêtement diélectrique le plus éloigné du substrat est appelé revêtement supérieur. Les empilements à plus d'une couche d'argent comprennent également des revêtements diélectriques intermédiaires situés entre le revêtement inférieur et supérieur.

Les couches diélectriques peuvent présenter une fonction barrière. On entend par couches diélectriques à fonction barrière (ci-après couche barrière), une couche en un matériau apte à faire barrière à la diffusion de l'oxygène et de l'eau à haute température, provenant de l'atmosphère ambiante ou du substrat transparent, vers la couche fonctionnelle. De telles couches diélectriques sont choisies parmi :
- les couches comprenant du silicium et/ou d'aluminium choisies parmi les oxydes, les nitrures et les oxynitrures, éventuellement dopé à l'aide d'au moins un autre élément,
- les couches à base d'oxyde de zinc et d'étain,
- les couches à base d'oxyde de titane et/ou de zirconium.

Les revêtements diélectriques peuvent comprendre une couche diélectrique comprenant du silicium et/ou de l'aluminium choisie parmi les couches à base de nitrure ou à base d'oxynitrure de silicium et/ou d'aluminium telle que les couches à base nitrure de silicium, les couches à base nitrure d'aluminium, les couches à base nitrure de silicium et d'aluminium, les couches à base d'oxynitrure de silicium, les couches à base d'oxynitrure d'aluminium et les couches à base d'oxynitrure de silicium et d'aluminium.

De préférence, chaque revêtement diélectrique comprend une couche diélectrique comprenant du silicium et/ou de l'aluminium choisie parmi les couches à base de nitrure ou à base d'oxynitrure de silicium et/ou d'aluminium.

De préférence, les couches comprenant du silicium et/ou de l'aluminium sont des couches à base de nitrure de silicium et/ou d'aluminium.

Les couches comprenant du silicium et/ou de l'aluminium peuvent comprendre ou être constituées d'éléments autres que le silicium, l'oxygène et l'azote. Ces éléments peuvent être choisis parmi le bore, le titane, l'hafnium et le zirconium.

Les couches comprenant du silicium peuvent comprendre au moins 50 %, au moins 60 %, au moins 65 %, au moins 70 % au moins 75,0 %, au moins 80 % ou au moins 90 % en masse de silicium par rapport à la masse de tous les éléments constituant la couche comprenant du silicium autres que de l'azote et de l'oxygène.

De préférence, la couche comprenant du silicium comprend au plus 35 %, au plus 20 % ou au plus 10 % en masse d'éléments autres que du silicium par rapport à la masse de tous les éléments constituant la couche comprenant du silicium autres que de l'oxygène et l'azote.

Selon un mode de réalisation, les couches comprenant du silicium comprennent moins de 50%, moins de 35%, moins de 30 %, moins de 20 %, moins de 10 %, moins de 5 % ou moins de 1 % en masse de zirconium par rapport à la masse de tous les éléments constituant la couche comprenant du silicium autres que de l'oxygène et l'azote.

La couche comprenant du silicium peut comprendre au moins 2,0 %, au moins 5,0 % au moins 6,0 % ou au moins 8,0 % en masse d'aluminium par rapport à la masse de tous les éléments constituant la couche à base d'oxyde de silicium autres que de l'oxygène et l'azote.

Les couches comprenant de l'aluminium peuvent comprendre au moins 50 %, au moins 60 %, au moins 65 %, au moins 70 % au moins 75,0 %, au moins 80 % ou au moins 90 % en masse d'aluminium par rapport à la masse de tous les éléments constituant la couche comprenant de l'aluminium autres que de l'azote et de l'oxygène. Selon l'invention :
- les couches à base de nitrure de silicium et/ou de l'aluminium comprennent essentiellement de l'azote et très peu d'oxygène,
- les couches à base d'oxynitrure de silicium et/ou de l'aluminium comprennent un mélange d'oxygène et d'azote.

Les quantités d'oxygène et d'azote dans une couche sont déterminées en pourcentages atomiques par rapport aux quantités totales d'oxygène et d'azote dans la couche considérée.

Les couches à base nitrure de silicium et/ou d'aluminium comprennent au moins 90 % en pourcentage atomique d'azote par rapport à l'oxygène et l'azote dans la couche à base de nitrure de silicium et/ou d'aluminium.

Les couches à base d'oxynitrure de silicium et/ou d'aluminium comprennent 10 à 90 % (bornes exclues) en pourcentage atomique d'azote par rapport à l'oxygène et l'azote dans la couche à base d'oxynitrure de silicium et/ou d'aluminium.

De préférence, les couches à base de nitrure de silicium se caractérise par un indice de réfraction à 550 nm, supérieur ou égale à 1,95.

De préférence, les couches à base d'oxynitrure de silicium se caractérise par un indice de réfraction à 550 nm intermédiaire entre une couche d'oxyde non nitrurée et une couche de nitrure non oxydée. Les couches à base d'oxynitrure de silicium ont de préférence un indice de réfraction à 550 nm supérieures à 1,55, 1,6 ou 1,7 ou compris entre 1,55 et 1,95, 1,6 et 2,0, 1,7 et 2,0 ou 1,7 et 1,9.

Ces indices de réfraction peuvent varier dans une certaine mesure selon les conditions de dépôts. En effet, en jouant sur certains paramètres tels que la pression ou la présence de dopants, on peut obtenir des couches plus ou moins denses et donc une variation d'indice de réfraction.

Les couches comprenant du silicium peuvent être des couches de nitrure de silicium et d'aluminium et/ou de zirconium. Ces couches de nitrure de silicium et d'aluminium et/ou de zirconium peuvent également comprendre, en poids par rapport au poids de silicium, aluminium et zirconium :
- 50 à 98 %, 60 à 90 %, 60 à 70 % en poids de silicium,
- 2 à 10 % en poids d'aluminium,
- 0 à 30 %, 10 à 30 % ou 15 à 27 % en poids de zirconium.

La somme des épaisseurs de toutes les couches comprenant du silicium et/ou de l'aluminium dans chaque revêtement diélectrique est supérieure ou égale à 5 nm, supérieure ou égale à 8 nm, supérieure ou égale à 10 nm.

La somme des épaisseurs de toutes les couches comprenant du silicium et/ou de l'aluminium dans le revêtement diélectrique situé en-dessous de la couche fonctionnelle à base d'argent est inférieure ou égale à 30 nm, inférieure ou égale à 25 nm, inférieure ou égale à 20 nm, inférieure ou égale à 15 nm.

La somme des épaisseurs de toutes les couches comprenant du silicium et/ou de l'aluminium dans le revêtement diélectrique situé au-dessus de la couche fonctionnelle à base d'argent est supérieure ou égale à 15 nm, supérieure ou égale à 20 nm, supérieure ou égale à 30 nm, supérieure ou égale à 40 nm.

Les revêtements diélectriques peuvent comporter d'autres couches que ces couches comprenant du silicium et/ou de l'aluminium.

De préférence, la somme des épaisseurs de toutes les couches comprenant du silicium et/ou de l'aluminium dans le revêtement diélectrique situé entre le substrat et la première couche d'argent est supérieure à 50%, supérieure à 60% supérieure à 70%, supérieure à 80 % ou supérieure à 90 % de l'épaisseur totale du revêtement diélectrique.

De préférence, la somme des épaisseurs de toutes les couches comprenant du silicium et/ou de l'aluminium dans chaque revêtement diélectrique situé au-dessus de la première couche métallique fonctionnelle à base d'argent est supérieure à 50%, supérieure à 60% supérieure à 70%, supérieure à 75 % ou supérieure à 80 % de l'épaisseur totale du revêtement diélectrique.

De préférence, la somme des épaisseurs de toutes les couches comprenant du silicium et/ou de l'aluminium dans chaque revêtement diélectrique est supérieure à 50%, supérieure à 60% supérieure à 70% ou supérieure à 75 % de l'épaisseur totale du revêtement diélectrique.

De préférence, la somme des épaisseurs de toutes les couches comprenant du silicium à base de nitrure de silicium et/ou d'aluminium dans le revêtement diélectrique situé entre le substrat et la première couche d'argent est supérieure à 50%, supérieure à 60% supérieure à 70%, supérieure à 75 % ou supérieure à 80 % de l'épaisseur totale du revêtement diélectrique.

De préférence, la somme des épaisseurs de toutes les couches comprenant du silicium et/ou de l'aluminium à base de nitrure de silicium et/ou d'aluminium dans chaque revêtement diélectrique situé au-dessus de la première couche métallique fonctionnelle à base d'argent est supérieure à 50%, supérieure à 60% supérieure à 70% ou supérieure à 75 % de l'épaisseur totale du revêtement diélectrique.

L'empilement de couches minces peut éventuellement comprendre une couche de protection. La couche de protection est de préférence la dernière couche de l'empilement, c'est-à-dire la couche la plus éloignée du substrat revêtu de l'empilement (avant traitement thermique).

Selon ce mode de réalisation, le revêtement diélectrique le plus éloigné du substrat comprend une couche de protection. Ces couches ont en général une épaisseur comprise entre 0,5 et 10 nm, entre 1 et 5 nm, entre 1 et 3 nm ou entre 1 et 2,5 nm. Cette couche de protection peut être choisie parmi une couche à base de titane, de zirconium, d'hafnium, de silicium, de zinc et/ou d'étain et leur mélange, ce ou ces métaux étant sous forme métallique, oxydée ou nitrurée.

Selon un mode de réalisation, la couche de protection est à base d'oxyde de zirconium et/ou de titane, de préférence à base d'oxyde de zirconium, d'oxyde de titane ou d'oxyde de titane et de zirconium.

Lorsque l'on détermine l'épaisseur d'un revêtement diélectrique, on prend en compte l'épaisseur de la couche de protection.

De préférence, la somme des épaisseurs de toutes les couches à base d'oxyde dans le revêtement diélectrique situé entre le substrat et la première couche d'argent est inférieure à 20%, inférieure à 10%, inférieure à 5% ou inférieure à 2% de l'épaisseur totale du revêtement diélectrique.

De préférence, la somme des épaisseurs de toutes les couches à base d'oxyde dans le revêtement diélectrique situé au-dessus d'une couche fonctionnelle à base d'argent est inférieure à 20%, inférieure à 10% ou inférieure à 8% de l'épaisseur totale du revêtement diélectrique.

De préférence, la somme des épaisseurs de toutes les couches à base d'oxyde dans chaque revêtement diélectrique est inférieure à 20%, inférieure à 10% ou inférieure à 8% de l'épaisseur totale du revêtement diélectrique.

Le revêtement diélectrique situé entre le substrat et la première couche métallique fonctionnelle et/ou chaque revêtement diélectrique situé au-dessus de la première couche fonctionnel à base d'argent peut être constitué uniquement de couche de nitrure à l'exception de la couche de protection supérieure.

Selon un mode de réalisation, l'empilement comprend :
- un revêtement diélectrique situé en-dessous de la couche métallique fonctionnelle à base d'argent,
- une couche de blocage,
- une couche métallique fonctionnelle à base d'argent,
- une couche de blocage,
- un revêtement diélectrique situé au-dessus de la couche métallique fonctionnelle à base d'argent comprenant éventuellement une couche de protection.

Selon un mode de réalisation, l'empilement comprend :
- un revêtement diélectrique situé en-dessous de la couche métallique fonctionnelle à base d'argent comprenant une couche à base de nitrure de silicium et/ou d'aluminium,
- une couche de blocage,
- une couche métallique fonctionnelle à base d'argent,
- une couche de blocage,
- un revêtement diélectrique situé au-dessus de la couche métallique fonctionnelle à base d'argent comprenant une couche à base de nitrure de silicium et/ou d'aluminium et éventuellement une couche de protection.

Le substrat revêtu de l'empilement ou l'empilement seulement peut être destiné à subir un traitement thermique. Le substrat revêtu de l'empilement peut être bombé et/ou trempé. Cependant, la présente invention concerne également le substrat revêtu non traité thermiquement.

L'empilement peut ne pas avoir subi un traitement thermique à une température supérieure à 500 °C, de préférence 300 °C ou 100 °C.

L'empilement peut avoir subi un traitement thermique à une température supérieure à 300 °C, de préférence 500 °C.

Les traitements thermiques sont choisis parmi un recuit, par exemple par un recuit thermique rapide (« Rapid Thermal Process ») tel qu'un recuit laser ou lampe flash, une trempe et/ou un bombage. Le recuit thermique rapide est par exemple décrit dans la demande WO 2008/096089.

La température de traitement thermique (au niveau de l'empilement) est supérieure à 300 °C, de préférence supérieure à 400 °C, et mieux supérieure à 500 °C.

Les substrats transparents selon l'invention sont de préférence en un matériau rigide minéral, comme en verre, ou organiques à base de polymères (ou en polymère).

Les substrats transparents organiques selon l'invention peuvent également être en polymère, rigides ou flexibles. Des exemples de polymères convenant selon l'invention comprennent, notamment :
- le polyéthylène,
- les polyesters tels que le polyéthylène téréphtalate (PET), le polybutylène téréphtalate (PBT), le polyéthylène naphtalate (PEN) ;
- les polyacrylates tels que le polyméthacrylate de méthyle (PMMA) ;
- les polycarbonates ;
- les polyuréthanes ;
- les polyamides ;
- les polyimides ;
- les polymères fluorés comme les fluoroesters tels que l'éthylène tétrafluoroéthylène (ETFE), le polyfluorure de vinylidène (PVDF), le polychlorotrifluorethylène (PCTFE), l'éthylène de chlorotrifluorethylène (ECTFE), les copolymères éthylène-propylène fluorés (FEP) ;
- les résines photoréticulables et/ou photopolymérisables, telles que les résines thiolène, polyuréthane, uréthane-acrylate, polyester-acrylate et
- les polythiouréthanes.

Le substrat est de préférence une feuille de verre ou de vitrocéramique.

Le substrat est de préférence transparent, incolore (il s'agit alors d'un verre clair ou extra-clair) ou coloré, par exemple en bleu, gris ou bronze. Le verre est de préférence de type silico-sodo-calcique, mais il peut également être en verre de type borosilicate ou alumino-borosilicate.

Selon un mode de réalisation préféré, le substrat est en verre, notamment silico-sodo-calcique ou en matière organique polymérique.

Le substrat possède avantageusement au moins une dimension supérieure ou égale à 1 m, voire 2 m et même 3 m. L'épaisseur du substrat varie généralement entre 0,5 mm et 19 mm, de préférence entre 0,7 et 9 mm, notamment entre 2 et 8 mm, voire entre 2,8 et 6 mm. Le substrat peut être plan ou bombé, voire flexible.

L'invention concerne également un vitrage comprenant au moins un matériau selon l'invention. L'invention concerne un vitrage pouvant être sous forme de vitrage monolithique, feuilleté ou multiple, en particulier double vitrage ou triple vitrage.

Un vitrage monolithique comprend un matériau comprenant un substrat transparent. La face 1 est à l'extérieur du bâtiment et constitue donc la paroi extérieure du vitrage, la face 2 est à l'intérieur du bâtiment et constitue donc la paroi intérieure du vitrage.

Un vitrage multiple comprend un matériau selon l'invention et au moins un substrat additionnel. Le matériau et le substrat additionnel sont soit cote à cote soit séparés par au moins une lame de gaz intercalaire. Le vitrage réalise une séparation entre un espace extérieur et un espace intérieur.

Un double vitrage, par exemple, comporte 4 faces, la face 1 est à l'extérieur du bâtiment et constitue donc la paroi extérieure du vitrage, la face 4 est à l'intérieur du bâtiment et constitue donc la paroi intérieure du vitrage, les faces 2 et 3 étant à l'intérieur du double vitrage.

Un vitrage feuilleté comprend un matériau selon l'invention et au moins un substrat additionnel, le matériau et le substrat additionnel sont séparés par au moins un intercalaire de feuilletage. Un vitrage feuilleté comporte donc au moins une structure de type matériau / intercalaire de feuilletage / substrat additionnel. Dans le cas d'un vitrage feuilleté, on numérote toutes les faces des matériaux et substrats additionnels et on ne numérote pas les faces des intercalaires de feuilletage. La face 1 est à l'extérieur du bâtiment et constitue donc la paroi extérieure du vitrage, la face 4 est à l'intérieur du bâtiment et constitue donc la paroi intérieure du vitrage, les faces 2 et 3 étant au contact de l'intercalaire de feuilletage.

L'intercalaire de feuilletage peut notamment être à base de polyvinylbutyral PVB, éthylène vinylacétate EVA, polyéthylène téréphtalate PET, polychlorure de vinyle PVC. L'empilement de couches minces est positionné sur l'une au moins des faces d'un des substrats.

Un vitrage feuilleté et multiple comprend un matériau selon l'invention et au moins deux substrats additionnels correspondant à un second substrat et un troisième substrat,
- le matériau et le troisième substrat sont séparés par au moins une lame de gaz intercalaire, et
- le matériau et le second substrat ou le second substrat et le troisième substrat, sont séparés par au moins un intercalaire de feuilletage.

Ces vitrages peuvent être montés sur un bâtiment ou un véhicule.

Les exemples suivants illustrent l'invention.

### Exemples

### I. Descriptions des matériaux

Des empilements de couches minces définis ci-après sont déposés sur des substrats en verre sodo-calcique clair d'une épaisseur de 4 mm.

Pour ces exemples, les conditions de dépôt des couches déposées par pulvérisation (pulvérisation dite « cathodique magnétron ») sont résumées dans le tableau 1 ci-dessous.

**[Tableau 1]**

| Tableau | Cibles employées | Pression µbar | Gaz |
|---|---|---|---|
| Si₃N₄ | Si:Al 92/8% pds | 2-7 | Ar 60% - O₂ 40% |
| TiN | Ti | 1-10 | Ar 85% - N2 15% |
| NiCr | Ni:Cr (80:20% at.) | 2 | Ar à 100 % |
| Ag | Ag | 6 | Ar à 100 % |
| TiO₂ | TiOx | 2 | Ar 88 % - O₂ 12 % |

| | | | |
|---|---|---|---|
| at. : atomique ; pds : poids ; * : à 550 nm. | | | |

Le tableau 2 ci-dessous liste les matériaux et les épaisseurs physiques en nanomètres (sauf autres indications) de chaque couche ou revêtement qui constitue les empilements en fonction de leurs positions vis-à-vis du substrat porteur de l'empilement.

**[Tableau 2]**

| Matériaux | | Cp-1 | Cp-2 | Cp-3 | Cp-4 | Inv-1 | Inv-2 | Inv-3 |
|---|---|---|---|---|---|---|---|---|
| RD | TiO₂ | 1 | 1 | 4 | 1 | 1 | 4 | 1 |
| | Si₃N₄ | 46 | 46 | 46 | 46 | 46 | 46 | 46 |
| | TiN | - | - | - | 13,5 | 8,5 | 8 | - |
| CB | NiCr | 2,5 | 2,5 | 2,5 | - | 0,8 | 1,3 | 2,5 |
| CF | Ag | 13 | 15,5 | 10 | 13 | 13 | 10 | 13 |
| CB | NiCr | 2,5 | 2,5 | 2,5 | 2,5 | 2,5 | 1,3 | 0,8 |
| RD | TiN | - | - | - | - | - | - | 9 |
| | Si₃N₄ | 12 | 12 | 9 | 12 | 12 | 9 | 12 |
| Substrat : verre | | | | | | | | |

| | | | | | | | | |
|---|---|---|---|---|---|---|---|---|
| RD : Revêtement diélectrique ; CB : Couche blocage ; CF : Couche fonctionnelle | | | | | | | | |

### II. Performances énergétiques : Première série

Le tableau 3 ci-dessous liste les performances optiques et énergétiques des matériaux objets des exemples Cp-1, Cp-2, Cp-4, Inv-1 et Inv-2 sous forme de double vitrage. Le double vitrage a une configuration : 6-16(Ar-90%)-4, c'est-à-dire une configuration constituée d'un matériau comprenant un substrat de type verre sodo-calcique ordinaire de 4 mm et d'un autre substrat de verre de type verre sodo-calcique de 4 mm, les deux substrats sont séparés par une lame de gaz intercalaire à 90 % d'argon et 10 % d'air d'une épaisseur de 16 mm. Les empilements sont positionnés en face 2. Le matériau revêtu de l'empilement n'a pas subi de traitement thermique. Ces résultats ont été obtenus par simulation.

**[Tableau 3]**

| Tableau 3 | Cp-1 | Cp-2 | Cp-4 | Inv-1 | Inv-3 |
|---|---|---|---|---|---|
| TL % | 42 | 40 | 43 | 42 | 43 |
| a* (T) | -3,12 | -3,38 | -2,61 | -3,04 | -3,79 |
| b* (T) | -1,13 | -1,07 | 1,76 | 1,99 | -1,31 |
| Rext % | 28 | 31 | 31 | 31 | 25 |
| a* (Rext) | -1,42 | -0,91 | -3,99 | -3,09 | -2,06 |
| b* (Rext) | -11,63 | -9,83 | -7,76 | -9,60 | -2,94 |
| Rint % | 11 | 12 | 11 | 12 | 11 |
| a* (Rint) | 7,72 | 8,32 | 1,09 | 4,23 | 7,54 |
| b* (Rint) | -11,47 | -11,28 | -12,29 | -14,25 | -7,27 |
| g-value | 0,34 | 0,32 | 0,33 | 0,32 | 0,33 |
| s | 1,24 | 1,28 | 1,29 | 1,30 | 1,32 |

L'exemple comparatif Cp-1 illustre l'état de la technique.

L'exemple Inv-1 selon l'invention a une transmission lumineuse équivalente à celle de Cp-1. Sa sélectivité est plus élevée que celle de Cp-1 (+0,06). Cela montre l'avantage de l'invention.

L'exemple Inv-3 selon l'invention a une transmission lumineuse équivalente à celle de Cp-1. Sa sélectivité est plus élevée que celle de Cp-1 (+0,08). Cela montre l'avantage de l'invention.

L'exemple Cp-2 vient montrer que ces résultats avantageux ne sont pas obtenus en utilisant une couche plus épaisse d'argent. L'exemple Cp-2 comprend les mêmes couches diélectriques et couches de blocage (natures et épaisseurs) et une couche d'argent plus épaisse que l'exemple comparatif Cp-1. Ce matériau a une transmission lumineuse plus faible et une réflexion extérieure plus élevée que celles de l'exemple Cp-1. Sa sélectivité est en revanche améliorée par rapport à Cp-1 (Cp-1=1,24 et Cp- 2=1,28) mais demeure plus faible que celle de l'exemple 1 (Inv-1= 1,30 et Cp- 2=1,28). Augmenter la quantité d'argent permet de rattraper en partie la sélectivité mais au prix d'une plus faible transmission lumineuse.

L'exemple Cp-4 comprenant uniquement une couche de nitrure de titane au contact de la couche fonctionnelle présente une sélectivité améliorée. Toutefois, la sélectivité reste moins intéressante que celle obtenue avec les exemples selon l'invention. Mais surtout, un tel matériau demeure extrêmement rayable. La présence d'une couche de blocage métallique telle que revendiquée entre la couche de nitrure de titane et la couche d'argent est indispensable pour obtenir une résistance aux rayures satisfaisante.

Cela montre que l'introduction d'une couche de nitrure de titane au contact d'une couche de blocage a un effet bénéfique sur les performances énergétiques du vitrage. Cet effet bénéfique ne peut pas être obtenu en jouant sur l'épaisseur de la couche d'argent.

### II. Performances énergétiques : Seconde série

Ces résultats ont été obtenus sur des prototypes, c'est à dire que les vitrages correspondant ont réellement été fabriqués.

Le tableau 4 liste les performances optiques et énergétiques des matériaux objets des exemples :
- DGU-Cp-3 et DGU-lnv-2 : double vitrage dans une configuration 6-16(Ar-90%)-4 avec l'empilement positionné en face 2, le substrat porteur de l'empilement n'a pas subi de traitement thermique à température élevée,
- DGU TT-Cp-3 et DGU TT-lnv-2 : double vitrage dans une configuration 6-16(Ar-90%)-4 avec l'empilement positionné en face 2, le substrat porteur de l'empilement a subi un traitement thermique à température élevée.
- Feuilleté-Cp-3 et Feuilleté-Inv-2 : vitrage feuilleté dans une configuration Substrat 4 mm/ Intercalaire PVB 0,38 mm /Substrat 4 mm avec l'empilement positionné en face 2, le substrat porteur de l'empilement n'a pas subi de traitement thermique à température élevée.

Le traitement thermique à température élevée est réalisé de la façon suivante :
- monté en température jusqu'à 700°C en 300-350 s,
- palier à 700°C pendant 30-50 s,
- descente en température en 100-150 s.

**[Tableau 4]**

| Tableau 4 | DGU | | DGU TT | | Feuilleté | |
|---|---|---|---|---|---|---|
| | Cp-3 | Inv-2 | Cp-3 | Inv-2 | Cp-3 | Inv-2 |
| TL % | 42,3 | 43,0 | 43,5 | 47,2 | 42,6 | 44,7 |
| a* (T) | -3,5 | -2,9 | -3,0 | -3,5 | -2,9 | -3,1 |
| b* (T) | 1,1 | 2,9 | 0,7 | 2,3 | -2,1 | -0,4 |
| Rext % | 29,5 | 31,5 | 27,0 | 29,8 | 26,6 | 27,0 |
| a* (Rext) | -4,0 | -5,1 | -4,5 | -4,3 | -1,5 | -1,5 |
| b* (Rext) | -8,7 | -7,4 | -8,5 | -8,4 | -1,5 | -1,1 |
| Rint % | 10,6 | 11,3 | 10,2 | 12,7 | 10,5 | 9,4 |
| a* (Rint) | 5,2 | 0,8 | 3,4 | 0,0 | 3,2 | 2,6 |
| b* (Rint) | -15,9 | -14,1 | -14,7 | -14,4 | -3,4 | -0,6 |
| g-value | 0,342 | 0,342 | 0,354 | 0,357 | 0,403 | 0,402 |
| s | 1,24 | 1,26 | 1,23 | 1,32 | 1,06 | 1,11 |

On observe dans tous les cas une amélioration de la sélectivité dans le cas de l'invention. L'effet sur la sélectivité est plus prononcé sur les vitrages trempés ou feuilletés.

On constate de plus que l'utilisation d'une couche de nitrure de titane, outre son influence sur la configuration énergétique trempée et feuilletée, neutralise également partiellement la couleur de réflexion intérieure des vitrages.

## Revendications

1. Matériau comprenant un substrat transparent revêtu d'un empilement comprenant au moins une couche métallique fonctionnelle à base d'argent et au moins deux revêtements diélectriques, chaque revêtement diélectrique comportant au moins une couche diélectrique, de manière à ce que chaque couche métallique fonctionnelle soit disposée entre deux revêtements diélectriques, **caractérisé en ce que** l'empilement comprend :
- deux couches de blocage situées au contact, en dessous et au-dessus, d'une couche métallique fonctionnelle à base d'argent, les couches de blocages sont choisies parmi les couches métalliques à base d'un métal ou d'un alliage métallique d'un ou plusieurs éléments choisis parmi le titane, le nickel, le chrome, le tantale, le zirconium et le niobium,
- une couche de nitrure de titane située au-contact d'une couche de blocage et séparée de la couche fonctionnelle à base d'argent par ladite couche de blocage.

2. Matériau selon la revendication 1 **caractérisé en ce que** la couche de nitrure de titane est située au-dessus de la couche fonctionnelle à base d'argent.

3. Matériau selon l'une quelconque des revendications précédentes **caractérisé en ce que** la couche de nitrure de titane a une épaisseur supérieure ou à égale à 2 nm.

4. Matériau selon l'une quelconque des revendications précédentes, **caractérisé en ce que** la couche de nitrure de titane a une épaisseur comprise entre 5 et 15 nm.

5. Matériau selon l'une quelconque des revendications précédentes **caractérisé en ce que** la couche de blocage au contact de la couche de nitrure de titane a une épaisseur inférieure à l'épaisseur de la couche de blocage qui n'est pas au contact de la couche de nitrure de titane.

6. Matériau selon l'une quelconque des revendications précédentes **caractérisé en ce que** les couches de blocage présentent une épaisseur comprise entre 0,1 et 5,0 nm.

7. Matériau selon l'une quelconque des revendications précédentes **caractérisé en ce que** chaque revêtement diélectrique comprend une couche diélectrique comprenant du silicium et/ou de l'aluminium choisie parmi les couches à base de nitrure ou à base d'oxynitrure de silicium et/ou d'aluminium.

8. Matériau selon l'une quelconque des revendications précédentes **caractérisé en ce que** la somme des épaisseurs de toutes les couches comprenant du silicium et/ou de l'aluminium dans chaque revêtement diélectrique est supérieure à 50 % de l'épaisseur totale du revêtement diélectrique.

9. Matériau selon l'une quelconque des revendications précédentes **caractérisé en ce que** la somme des épaisseurs de toutes les couches à base d'oxyde dans chaque revêtement diélectrique est inférieure à 20 % de l'épaisseur totale du revêtement diélectrique.

10. Matériau selon l'une quelconque des revendications précédentes **caractérisé en ce que** le revêtement diélectrique le plus éloigné du substrat comprend une couche de protection choisie parmi une couche à base de titane, de zirconium, d'hafnium, de silicium, de zinc et/ou d'étain et leur mélange, ce ou ces métaux étant sous forme métallique, oxydée ou nitrurée.

11. Matériau selon l'une quelconque des revendications précédentes **caractérisé en ce que** le substrat revêtu de l'empilement est bombé et/ou trempé.

12. Matériau selon l'une quelconque des revendications précédentes, **caractérisé en ce que** le substrat est en verre, notamment silico-sodo-calcique ou en matière organique polymérique.

13. Vitrage comprenant un matériau selon l'une quelconque des revendications 1 à 12 **caractérisé en ce qu'**il est sous forme de vitrage monolithique, feuilleté et/ou multiple.

14. Vitrage multiple selon la revendication 13 comprenant un matériau et au moins un substrat additionnel, le matériau et le substrat additionnel sont séparés par au moins une lame de gaz intercalaire.

15. Vitrage feuilleté selon la revendication 14 comprenant un matériau et au moins un substrat additionnel, le matériau et le substrat additionnel sont séparés par au moins un intercalaire de feuilletage.

## Patentansprüche

1. Material, umfassend ein transparentes Substrat, das mit einer Stapelung beschichtet ist, umfassend mindestens eine funktionelle Metallschicht auf Basis von Silber und mindestens zwei dielektrische Beschichtungen, wobei jede dielektrische Beschichtung mindestens eine dielektrische Schicht vorweist, sodass jede funktionelle Metallschicht zwischen zwei dielektrischen Beschichtungen angeordnet ist, **dadurch gekennzeichnet, dass** die Stapelung umfasst:
- zwei Sperrschichten, die sich in Kontakt, unter und über einer funktionellen Metallschicht auf Basis von Silber befinden, wobei die Sperrschichten aus Metallschichten auf Basis eines Metalls oder einer Metalllegierung eines oder mehrerer Elemente ausgewählt sind, die aus Titan, Nickel, Chrom, Tantal, Zirkonium und Niob ausgewählt sind,
- eine Titannitridschicht, die sich in Kontakt mit einer Sperrschicht befindet und durch die Sperrschicht von der funktionellen Schicht auf Basis von Silber getrennt ist.

2. Material nach Anspruch 1, **dadurch gekennzeichnet, dass** sich die Titannitridschicht über der funktionellen Schicht auf Basis von Silber befindet.

3. Material nach einem der vorstehenden Ansprüche,
**dadurch gekennzeichnet, dass** die Titannitridschicht eine Dicke größer als oder gleich 2 nm besitzt.

4. Material nach einem der vorstehenden Ansprüche,
**dadurch gekennzeichnet, dass** die Titannitridschicht eine Dicke zwischen 5 und 15 nm besitzt.

5. Material nach einem der vorstehenden Ansprüche,
**dadurch gekennzeichnet, dass** die Sperrschicht, die mit der Titannitridschicht in Kontakt ist, eine Dicke kleiner als die Dicke der Sperrschicht besitzt, die nicht mit der Titannitridschicht in Kontakt ist.

6. Material nach einem der vorstehenden Ansprüche,
**dadurch gekennzeichnet, dass** die Sperrschichten eine Dicke zwischen 0,1 und 5,0 nm aufweisen.

7. Material nach einem der vorstehenden Ansprüche,
**dadurch gekennzeichnet, dass** jede dielektrische Beschichtung eine dielektrische Schicht umfasst, umfassend Silizium und/oder Aluminium, die aus den Schichten auf Basis von Nitrid oder auf Basis von Siliziumoxynitrid und/oder Aluminium ausgewählt ist.

8. Material nach einem der vorstehenden Ansprüche,
**dadurch gekennzeichnet, dass** die Summe der Dicken aller Schichten, umfassend Silizium und/oder Aluminium, in jeder dielektrischen Beschichtung mehr als 50 % der Gesamtdicke der dielektrischen Beschichtung beträgt.

9. Material nach einem der vorstehenden Ansprüche,
**dadurch gekennzeichnet, dass** die Summe der Dicken aller Schichten auf Basis von Oxid in jeder dielektrischen Beschichtung weniger als 20 % der Gesamtdicke der dielektrischen Beschichtung beträgt.

10. Material nach einem der vorstehenden Ansprüche,
**dadurch gekennzeichnet, dass** die am weitesten von dem Substrat entfernte dielektrische Beschichtung eine Schutzschicht umfasst, die aus einer Schicht auf Basis von Titan, Zirkonium, Hafnium, Silizium, Zink und/oder Zinn und deren Mischung ausgewählt ist, wobei dieses oder diese Metall(e) in metallischer, oxidierter oder nitrierter Form ist/sind.

11. Material nach einem der vorstehenden Ansprüche,
**dadurch gekennzeichnet, dass** das beschichtete Substrat der Stapelung gebogen und/oder gehärtet ist.

12. Material nach einem der vorstehenden Ansprüche,
**dadurch gekennzeichnet, dass** das Substrat aus Glas, insbesondere Kalknatronsilikatglas, oder aus polymerem organischem Material besteht.

13. Verglasung, umfassend ein Material nach einem der Ansprüche 1 bis 12, **dadurch gekennzeichnet, dass** sie in Form einer Einscheiben-, Verbund- und/oder Mehrfachverglasung ist.

14. Mehrfachverglasung nach Anspruch 13, umfassend ein Material und mindestens ein zusätzliches Substrat, wobei das Material und das zusätzliche Substrat durch mindestens einen Zwischenlagengasspalt getrennt sind.

15. Verbundverglasung nach Anspruch 14, umfassend ein Material und mindestens ein zusätzliches Substrat, wobei das Material und das zusätzliche Substrat durch mindestens eine Verbundzwischenlage getrennt sind.

## Claims

1. A material comprising a transparent substrate coated with a stack comprising at least one silver-based functional metallic layer and at least two dielectric coatings, each dielectric coating including at least one dielectric layer, so that each functional metallic layer is positioned between two dielectric coatings, **characterized in that** the stack comprises:
- two blocking layers located in contact, below and above, with a silver-based functional metallic layer, the blocking layers are chosen from metallic layers based on a metal or a metal alloy of one or more elements chosen from titanium, nickel, chromium, tantalum, zirconium and niobium,
- a titanium nitride layer located in contact with a blocking layer and separated from the silver-based functional layer by said blocking layer.

2. The material according to claim 1, **characterized in that** the titanium nitride layer is located above the silver-based functional layer.

3. The material according to any one of the preceding claims, **characterized in that** the titanium nitride layer has a thickness greater than or equal to 2 nm.

4. The material according to any one of the preceding claims, **characterized in that** the titanium nitride layer has a thickness of between 5 and 15 nm.

5. The material according to any one of the preceding claims, **characterized in that** the blocking layer in contact with the titanium nitride layer has a thickness less than the thickness of the blocking layer which is not in contact with the titanium nitride layer.

6. The material according to any one of the preceding claims, **characterized in that** the blocking layers have a thickness of between 0.1 and 5.0 nm.

7. The material according to any one of the preceding claims, **characterized in that** each dielectric coating comprises a dielectric layer comprising silicon and/or aluminum selected from layers based on silicon and/or aluminum nitride or oxynitride.

8. The material according to any one of the preceding claims, **characterized in that** the sum of the thicknesses of all the layers comprising silicon and/or aluminum in each dielectric coating is greater than 50% of the total thickness of the dielectric coating.

9. The material according to any one of the preceding claims, **characterized in that** the sum of the thicknesses of all the oxide-based layers in each dielectric coating is less than 20% of the total thickness of the dielectric coating.

10. The material according to any one of the preceding claims, **characterized in that** the dielectric coating furthest from the substrate comprises a protective layer chosen from a layer based on titanium, zirconium, hafnium, silicon, zinc and/or tin and mixtures thereof, this or these metals being in the metallic, oxidized or nitrided form.

11. The material according to any one of the preceding claims, **characterized in that** the substrate coated with the stack is bent and/or tempered.

12. The material according to any one of the preceding claims, **characterized in that** the substrate is made of glass, especially soda-lime-silica glass or of polymer organic material.

13. A glazing comprising a material according to any one of claims 1 to 12, **characterized in that** it is in the form of a monolithic, laminated and/or multiple glazing.

14. The multiple glazing according to claim 13, comprising a material and at least one additional substrate, the material and the additional substrate are separated by at least one interlayer gas gap.

15. The laminated glazing according to claim 14, comprising a material and at least one additional substrate, the material and the additional substrate are separated by at least one lamination interlayer.
